# EUROPEAN PATENT SPECIFICATION

(11) **EP 0 624 975 B1**
(45) Date of publication and mention of the grant of the patent: **11.11.1998**
(21) Application number: 94303327.4
(22) Date of filing: 09.05.1994
(51) Int. Cl.: H04N 5/46

(54) **Television system dependent video signal processing**
Fernsehsystemabhängige Videosignalverarbeitung
Traitement de signal vidéo associé à un système de télévision

(30) Priority: 14.05.1993 JP 113257/93
(43) Date of publication of application: 17.11.1994
(73) Proprietor: SONY CORPORATION, Tokyo 141 (JP)
(72) Inventor: Yoshida, Chisato, Shinagawa-ku, Tokyo (JP)
(74) Representative: Nicholls, Michael John

(56) References cited:
- EP-A- 0 343 539
- EP-A- 0 381 271
- EP-A- 0 465 225
- EP-A- 0 534 220
- US-A- 5 168 362
- US-A- 5 181 116

## Description

This invention relates to a method for processing picture signals for a variety of television systems, a picture signal processing apparatus for carrying out the picture signal processing method, and a television apparatus provided with the picture signal processing apparatus for displaying a picture pertaining to picture signals of a variety of television systems.

In a television apparatus including a display device having an aspect ratio of the display surface of 4 : 3, there has hitherto been proposed a so-called multi-standard television apparatus in which picture signals of a variety of television systems, such as NTSC or PAL systems, are selectively supplied for enabling the picture to be displayed. One multi-standard television is disclosed in European Patent Application No. 0,551,168, for example.

With the multi-standard television apparatus, the horizontal deflection period (fH) of these various systems when the NTSC system picture signals are supplied differs from that when the PAL system picture signals are supplied so that the stationary phase error in the phase comparator of the line lock PLL circuit constituting the deflection circuit for the NTSC system differs from that for the PAL system to produce a difference in the position of the displayed picture in the horizontal direction.

Such difference in the picture display position caused by the difference in the television systems may be corrected by setting plural adjustment points for the NTSC system, the PAL system or the like in the deflection circuit. However, such adjustment of the deflection circuit complicates the manufacture and adjustment of the television apparatus.

Consequently, the difference in the display picture position due to the difference in the television systems is over looked without being corrected in the television apparatus for the purpose of simplifying the manufacture.

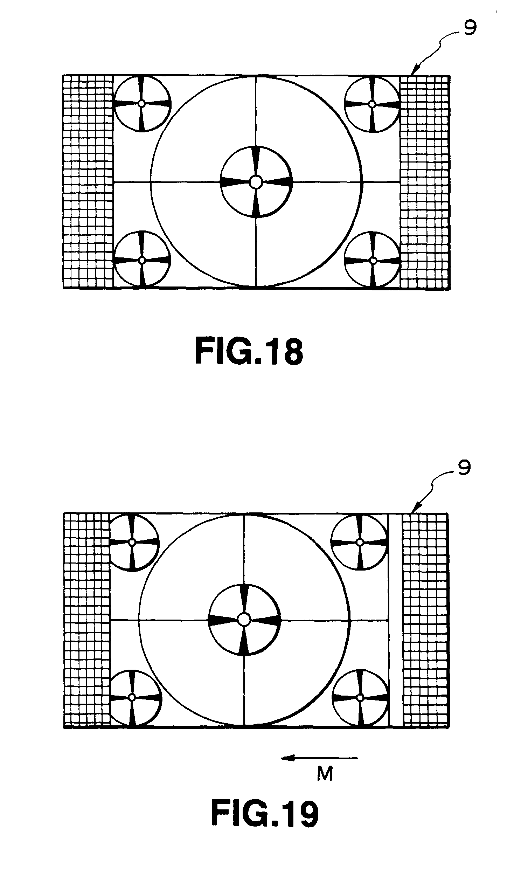

In the above-described so-called multi-standard television apparatus, such apparatus has been proposed in which the aspect ratio of the display surface is set to 16 : 9 for conformity to the HDTV (so-called hi-vision) system. If the picture with the aspect ratio of 4 : 3 is displayed in such multi-standard television apparatus, frame portions are formed on the left and right sides of a region corresponding to the aspect ratio of 4: 3 on the display surface of a CRT 9, on which the picture is to be displayed, as shown in Fig.18.

If, in the multi-standard television apparatus, having the aspect ratio of the display surface of 16 : 9, the difference in the picture display position is produced due to the difference in the television system, the picture is displayed at a position offset relative to the frame portions, as shown by arrow M in Fig.19, resulting in an unnatural display state. If the display position is corrected by the adjustment by the deflection circuit as described above, the frame portions are moved in the correcting direction along with the displayed picture, so that the relative position between the displayed picture and the frame portions is not corrected and hence the forced display state is not resolved.

In view of the above-described status of the art, it is an object of the present invention to provide a picture signal processing method and apparatus and a television apparatus which is able to correct the display picture position on the display surface depending on the difference in the television systems, and which may be advantageously applied in particular to the multi-standard television apparatus having the aspect ratio of the display surface of 16 : 9.

US-A-5,168,362 discloses an automatic pedestal processing circuit according to the preamble of claim 4.

According to the present invention there is provided a video signal processing method comprising the steps of:
a first step for selecting on analog video signal from a plurality of kinds of analog video signal;
a second step for converting said selected video signal into a digital video signal;
a third step for storing said digital video signal in a memory;
a fourth step for synchronizing a line lock PLL circuit with the horizontal synchronizing signals of said analog video signal; and
a fifth step for supplying a write address initializing pulse to said field memory, characterised by:
a sixth step of detecting the type of said selected video signal; and in that
in said fifth step the timing of said write address initializing pulse is changed in accordance with the detected type of said selected video signal and the television set to which said line lock PLL circuit is adapted so as to compensate for a difference in the stationary phase error of said analog video signal in the line lock PLL circuit; and in that said memory is a field memory.

The present invention also provides a video signal processing circuit comprising:
an input means for supplying a plurality of kinds of analog video signals;
a switch means for selecting one analog video signal from said plurality of kinds of analog video signals;
an A/D converter for converting said video signal into digital video signal;
a memory for storing said digital video signal;
a line lock PLL circuit to be synchronized with the horizontal synchronizing signals of said analog video signal; and
a control circuit for supplying a write address initializing pulse to said memory; characterised by:
a picture signal processing circuit for detecting a type of said input video signal, and wherein said control circuit is adapted to change the timing of said write address initializing pulse in accordance with the detected type of said selected video signal and the television system to which said line lock PLL circuit is adapted to compensate for a difference in the stationary phase error of said analog video signal in the line lock PLL circuit; and in that said memory is a field memory.

The television apparatus according to the present invention has the above-defined picture signal processing apparatus and a picture display device.

With the television apparatus according to the present invention, the display surface of picture display means may have an aspect ratio of 16 : 9 and, at least if the television system for the analog picture signals is the NTSC system, PAL system or the SECAM system, the digital picture signals may be read from the field memory at a rate equal to twice the write rate of the digital picture signals.

With the picture signal processing method according to the present invention, when the analog picture signals are converted into digital picture signals written in the field memory, and the digital picture signals read from the field memory are converted into analog signals which are supplied to a display device for display, the write address initializing pulse, having its timing changed with a difference in the stationary phase error of the analog picture signals in a line lock PLL circuit synchronized with the horizontal synchronizing signals for the analog picture signals which is associated with the television systems is supplied to the field memory, and the relation of association between the digital picture signals and the write start address in the field memory is changed in association with the television systems, so that the write start address in the field memory and the start end of the picture field coincide with each other even with picture signals with different television systems, with the result that, if these signals are read in a similar manner, there is no risk of the picture display position in the display device being offset in the horizontal direction.

Also, with the picture signal processing apparatus according to the present invention, the field memory in which digital picture signals converted from analog picture signals by the A/D converter is fed from the control circuit with the write address initializing pulse which has its timing changed depending on the difference in the stationary phase error associated with the television systems for the analog picture signals in a line lock PLL circuit synchronized with the horizontal synchronizing signals of the analog picture signals, so that the picture signals having different television systems may be written in such a manner that the start end of the picture field coincides with the write start address and, even if the signals are read in the similar manner, there is no risk of deviation of the picture display position on the display device in the horizontal direction.

Since the television apparatus according to the present invention has the above-defined picture processing apparatus and the picture display device, the picture may be displayed at the same location on the display device even if the picture signals for the picture are of different television systems.

If, in the above-defined television apparatus, the aspect ratio of the display surface of the picture display means is set to 16 : 9, and the field memory is adapted for reading the digital picture signals at a rate approximately twice the write rate of the digital picture signals, with at least the television system of the analog picture signals being the NTSC, PAL or SECAM, the picture display may be made at the same location on the display device for picture signals of the NTSC, PAL or SECAM system, while accommodating for the so-called high-vision (HDTV) system.

With the method for processing picture signals according to the present invention in which analog picture signals are converted into digital picture signals which are written as digital picture signals in a field memory, and in which the digital picture signals read from the field memory are converted into analog signals which are routed to a display device for picture display, a write address initializing pulse having its timing changed depending on the difference in the stationary phase error of the analog signals in a line lock PLL circuit synchronized with the horizontal synchronizing signals of the analog picture signals is supplied to the field memory is supplied to the field memory, with the relation of association between the digital picture signals and the write start address in the field memory being changed in association with the television systems.

Consequently, the write start address in the field memory and the start end of the picture field may be coincided with each other even with picture signals with different television systems, so that, if these signals are read in a similar manner,it becomes possible to prevent the picture display position in the display device being offset in the horizontal direction.

Also, with the picture signal processing apparatus according to the present invention, the field memory in which digital picture signals converted from analog picture signals by the A/D converter may be fed from the control circuit with the write address initializing pulse having its timing changed depending on the difference in the stationary phase error of the analog signals in the line lock PLL circuit synchronized with the horizontal synchronizing signals, which difference is associated with the different television systems.

Therefore, with the present picture signal processing apparatus, the picture signals of different television systems may be written so that the start end of the picture field coincides with the write start address and, even if the signals are read in the similar manner, there is no risk of deviation of the picture display position on the display device in the horizontal direction.

With the television apparatus, having the above-defined picture signal processing apparatus and the picture display device, the picture may be displayed at the same location on the display device without horizontal deviation of the picture display position even if the picture signals of different television system are being handled for display.

If, in the above-defined television apparatus, the aspect ratio of the display surface of the picture display means is set to 16 : 9, and the field memory is adapted for reading the digital picture signals at a rate approximately twice the write rate of the digital picture signals, with at least the television system of the analog picture signals being the NTSC, PAL or SECAM, the picture display may be made at the same location on the display device for picture signals of the NTSC, PAL or SECAM system, while accommodating for the so-called high-vision (HDTV) system.

Thus the present invention provides a picture signal processing method and apparatus and a television apparatus which is capable of properly correcting the position of the picture displayed on the display surface to accommodate the difference in the television systems, and which may be advantageously applied to a so-called multiple standard television apparatus having the aspect ratio of 16 : 9.

This invention will be further described by way of non-limitative example with reference to the accompanying drawings, in which:-

Fig.1 is a block diagram showing an arrangement of a television apparatus according to the present invention having picture signal processing circuit of the present invention for executing the picture signal processing method according to the present invention.

Fig.2 is a block diagram showing an arrangement of the picture signal processing device.

Fig.3 is a block diagram showing the structure of a field memory of the picture signal processing device.

Fig.4 is a graph for illustrating the operations of writing and reading the picture signals in the field memory.

Fig.5 is a timing chart for illustrating the timing of the pulse supplied during writing the picture signals to the field memory.

Fig.6 is a timing chart showing essential portions of the timing chart of Fig.5 to an enlarged scale.

Fig.7 is a front view showing state of storage of the picture signals by the field memory on the display device of the television apparatus.

Fig.8 is a timing chart for illustrating the timing of the pulse supplied during reading the picture signals to the field memory.

Fig.9 is a timing chart showing essential portions of the timing chart of Fig.8 to an enlarged scale.

Fig.10 is a front view showing the state of picture display on the display device of the television apparatus.

Fig.11 is a chart showing changes in writing and readout addresses in the field memory.

Fig.12 is a front view showing the display state on the display device in the full-display mode of the television apparatus.

Fig.13 is a front view showing the display state on the display device in the zoom display mode of the television apparatus.

Fig.14 is a front view showing the display state on the display device in the normal display mode of the television apparatus.

Fig.15 is a block diagram showing an arrangement of a line lock PLL circuit of the picture signal processing apparatus.

Fig.16 is a time chart showing the normal locked state in the line lock PLL circuit.

Fig.17 is a timing chart showing the locked state in the line lock PLL circuit subject to the stationary phase error.

Fig.18 is a front view showing the state in which the picture having the aspect ratio of 4 : 3 is displayed on the display device of a conventional television apparatus.

Fig.19 is a front view showing the state in which, when a picture of a different television system having an aspect ratio of 4 : 3 is displayed on the display device of the conventional television apparatus, the picture is deviated in the horizontal direction.

Referring to the drawings, certain illustrative embodiments of the present invention will be explained in detail.

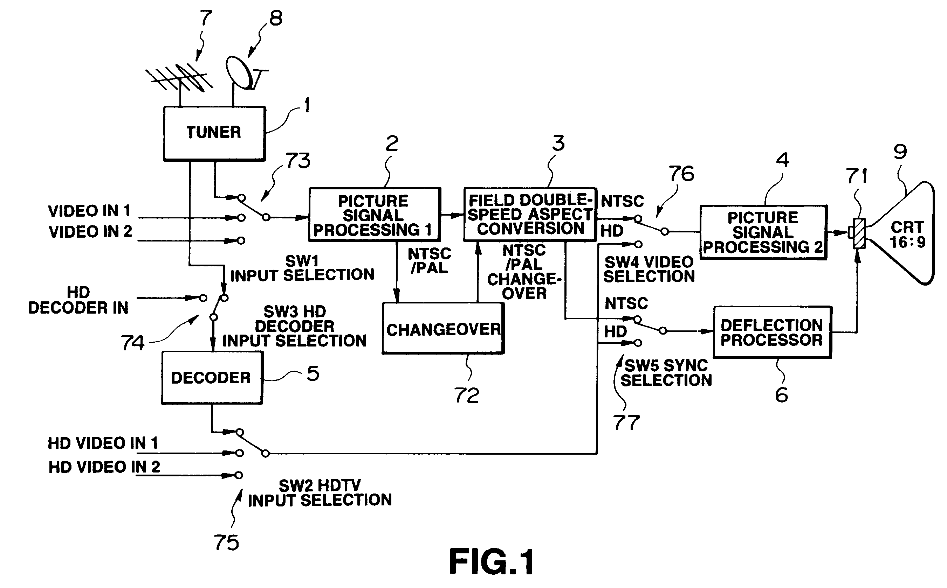

In the present embodiment, the television apparatus according to the present invention is arranged and constructed as an apparatus of the high definition television (HDTV) system having an aspect ratio of 16 : 9, as a display device, as shown in Fig.1.

The television apparatus includes a tuner 1 for receiving BS broadcast electrical waves, CS broadcast electrical waves, UHF broadcast electrical waves or VHF broadcast electrical waves over a Yagi antenna 7 or a parabola antenna 8, or receiving CATV signals over a cable, not shown. Of the signals received by the tuner 1, picture signals of the PAL system (or the SECAM system) or the NTSC system, that is picture signals having the number of scanning lines equal to 625 or 525 and the aspect ratio of 4 :3 (PAL signals or NTSC signals) are routed via a first changeover switch (SW1 : input selection) 73 to a first picture signal processing circuit 2.

The first changeover switch 73 selectively changes over the signals routed from the tuner 1 and video signals (VIDEO in 1,VIDEO in 2), which are PAL signals or NTSC signals as entered from outside, and routes the selected signals to a first picture signals processing circuit 2.

Of the signals received by the tuner 1, the picture signals of the HDTV system, that is the picture signals (HDTV signals) having the aspect ratio of 16 : 9 and the number of the scanning lines equal to 1125, are routed via a third changeover switch (SW3 : HD decoder input selection) 74 to a decoder 5.

The decoder 5 is designed to decode the HDTV signals, encoded by the so-called MUSE system, ATV system or the HD-MAC system, in accordance with the encoding system for the HDTV signals.

The third changeover switch 74 selectively changes over the signals routed from the tuner 1 and HDTV signals (HD DECODER in) as entered from outside, and routes the selected signals to the decoder 5. The HDTV signals, decoded by the decoder 5, is routed via a second changeover switch (SW2 : HDTV input section) 75 to a fourth changeover switch (SW4 : Video input election) 76. The second changeover switch 75 selects one of the HDTV signals routed from the decoder 5 or video signals (HD VIDEO in 1, HD VIDEO in 2), which are HDTV signals as entered from outside and pre-decoded, and routes the selected signals to the second picture signals processing circuit 4.

The decoder 5 outputs HDTV synchronization signals which are routed to a fifth changeover circuit (SW5 : Sync selection) 77.

The PAL signals or NTSC signals, transmitted to the first picture signal processing circuit 2, are processed by the first signal processing circuit 2 with Y/C separation, chroma decoding or sync separation to produce luminance signals Y, color difference signals R - Y, B - Y and synchronization signals. These signals Y R - Y and B - Y are then routed to a field doubler aspect conversion circuit 3 which is the picture signal processing circuit according to the present invention and which is designed to implement the picture signal processing method according to the present invention. A television system discrimination signal (PAL/ NTSC) is routed from the first picture signal processing circuit 2 to the changeover circuit 72. Responsive to the discrimination signals, the changeover circuit 72 routes the PAL/ NTSC changeover signals to the field double-speed aspect conversion circuit 3.

The signals derived from the PAL signals or the NTSC signals are processed by the field doubler aspect conversion circuit 3 with field doubler (double speed) processing, aspect ratio conversion or scrolling. Of the processed signals, picture signal components (luminance signals Y, color difference signals R - Y and B - Y) are routed to the fourth changeover switch 76, while synchronization signal components are routed to the fifth changeover switch 77.

If the picture signals received by the tuner 1 are PAL signals or NTSC signals, the fourth changeover switch 76 routes picture signal outputted from the field double-speed aspect conversion circuit 3 to the second picture signal processing circuit 4. Similarly, if the picture signals received by the tuner 1 are HDTV signals, the fourth changeover switch 76 routes the picture signals outputted by the decoder 5 or the HDTV signals entered via the second changeover switch 75 to the second picture signals processing circuit 4. On the other hand, if the picture signals received by the tuner 1 are PAL signals or NTSC signals, the fourth changeover switch 76 routes synchronization signals outputted from the field double-speed aspect conversion circuit 3 to a deflection processor 6. Similarly, if the picture signals received by the tuner 1 are HDTV signals, the fourth changeover switch 76 routes the synchronization signals outputted from the decoder 5 or the synchronization signals provided thereto via the second changeover switch 75 along with the HDTV signals to the deflection processor 75.

The second picture signal processor 4 generates three prime color signals R, G and B from the luminance signals Y, color difference signals R - Y, B - Y and amplifies the three prime color signals. The amplified three color signals are routed to a CRT 9. The deflection processor 6 also generates the deflection waveform from synchronization signals to provide the deflection waveform to a deflection yoke 71 of the CRT 9. The CRT9 is designed so that the electron beams representing the three prime color signals R, G and B are deflected in accordance with the deflection waveform for displaying a picture on a display screen.

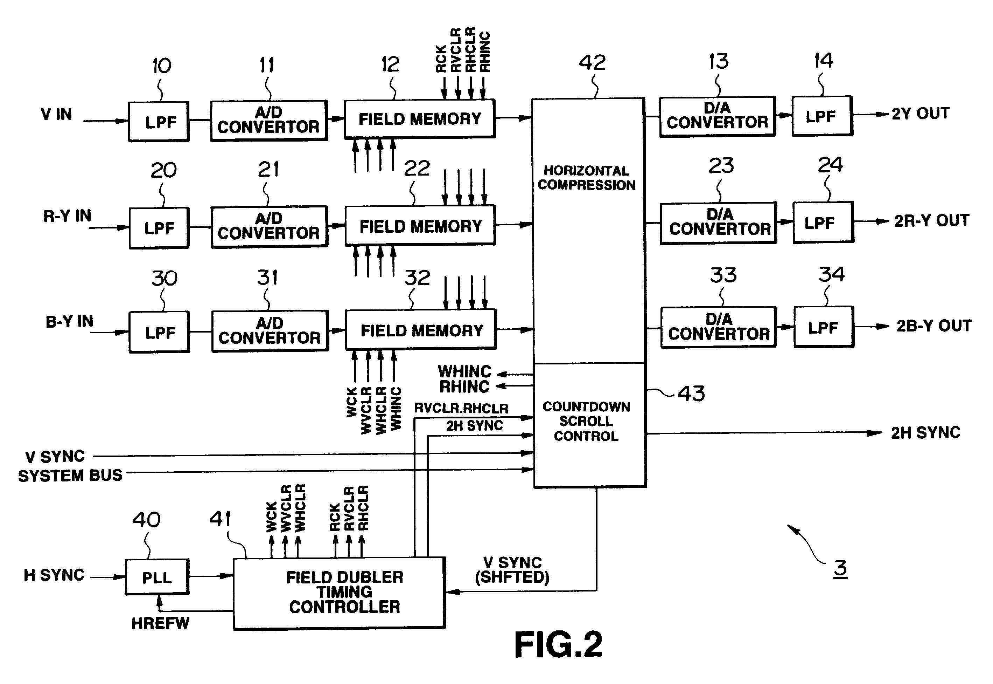

The field double-speed aspect conversion circuit 3 is made up of a line-lock PLL circuit 40, first to third field memories 12, 22, 32, a double-speed controller 41 and a count controller 43, as shown in Fig.2. The field double-speed aspect conversion circuit 3 performs a field double-speed processing of doubling the horizontal scanning frequency Fh and the vertical scanning frequency fV for the PAL signals and the NTSC signals in order to approach the horizonal scanning frequency to the horizonal scanning frequency of the HDTV signals, and in order to improve the picture quality of the displayed picture by removing so-called field flicker.

In the field double-speed aspect conversion circuit 3, the input luminance signals Y in are routed via a low-pass filter (LPF) 10 and converted by a first A/D converter 11 into digital signals which are written in a first field memory 12. The input color difference signals (R - Yin) are routed via a low-pass filter (LPF) 20 and converted by a second A/D converter 21 into digital signals which are written in a second field memory 22. Furthermore, the input color difference signals (B - Yin) are routed via a low-pass filter (LPF) 30 and converted by a third A/D converter 31 into digital signals which are written in a third field memory 32.

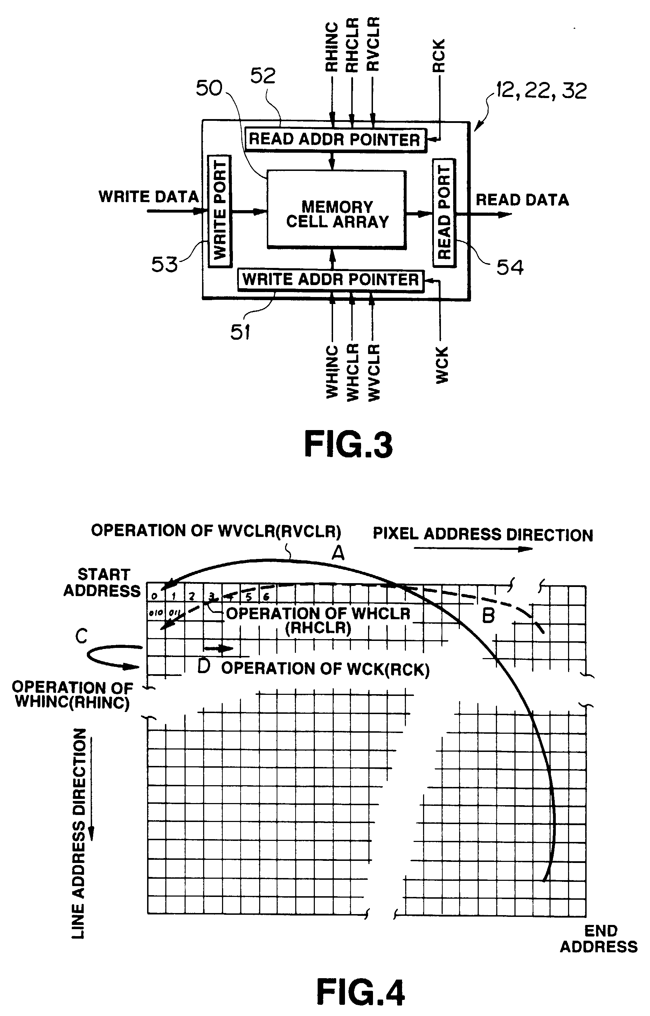

Each of the field memories 12, 22 and 32 includes a memory cell array 50, as shown in Fig.3. The inner area of the memory cell array 50 is divided into elements of a matrix array having addresses by pixel addresses in the horizontal direction and byline addresses in the vertical direction. One-field picture signals are written and read in the sequence of the addresses on the line basis as shown in Fig.4. In each of these field memories 12, 22 and 32, signals to be written in the memory cell array 50 are provided to the memory cell array 50 via a write port 53. In each of these field memories 12, 22 and 32, signals read from the memory cell array 50 are outputted to outside via a read port 54.

Each of these field memories 12, 22 and 32 includes a write address pointer 52. The write address pointer 52 is fed with a write side system clock WCK (clock for A/D, field memory write and write pixel address increment), a write address clear pulse,as a write address initializing pulse WVCLR (field memory write reset on every VSYNC (jump to start of field)), a write pixel address clear pulse WHCLR (field memory write reset on every HSYNC (jump to start of line)), a write line address line increment pulse WHINC (filed memory write line address increment plus (jump to next line)) to control signal writing in the memory cell array 50.

Signal writing is performed with the aid of the write address pointer 52 in such a manner that the pixel addresses are incremented by one in synchronism with the write side system clock WCK and, when the write address clear pulse WVCLR is fed to the address pointer 52, the pointer reverts to the start address, as shown by arrow D in Fig.4. When the write pixel address clear pulse WHCLR is fed to the address pointer 52, the address pointer reverts to the initial address of the pixel addresses (leading address on the line basis), as shown by arrow B in Fig.4. Also, when the write line address increment pulse WHINC is fed to the address pointer 52, the address pointer increments the line address by 1, while allowing the signals to be written, as shown by arrow C in Fig.4.

Each of the field memories 12, 22 and 32 includes a read address pointer 51. The read address pointer 51 is fed with read side system clocks RCK (clocks for field memory read, D/A and read pixel address increment), read address clear pulses RVCLR (field memory read reset on every 2VSYNC (jump to start of field)), read pixel address clear pulses RHCLR (field memory read reset on every 2HSYNC (jump to start of line)) and read line address increment pulses RHINC (field memory read line address increment plus (jump to next line )) to control signal readout from the memory cell array 50.

Signal readout is performed with the aid of the read address pointer 51 in such a manner that the pixel addresses are incremented by one in synchronism with the readout side system clock RCK and, when the read address clear pulse RVCLR is fed to the address pointer 51, the pointer reverts to the start address. When the read pixel address clear pulse RHCLR is fed to the address pointer 51, the address pointer reverts to the initial address of the pixel addresses and, when the read line address increment pulse RHINC is fed to the address pointer 51, the address pointer increments the line address by 1.

In the present embodiment, the write side system clock WCK is also the sampling frequency for each of the A/D converters 11, 21 and 31, which is equal to the horizontal scanning frequency Fh x 910 x 2 x (4/3). Thus it is equal to 37.92 Mhz and 38.19 Mhz for the PAL and NTSC signals, respectively.

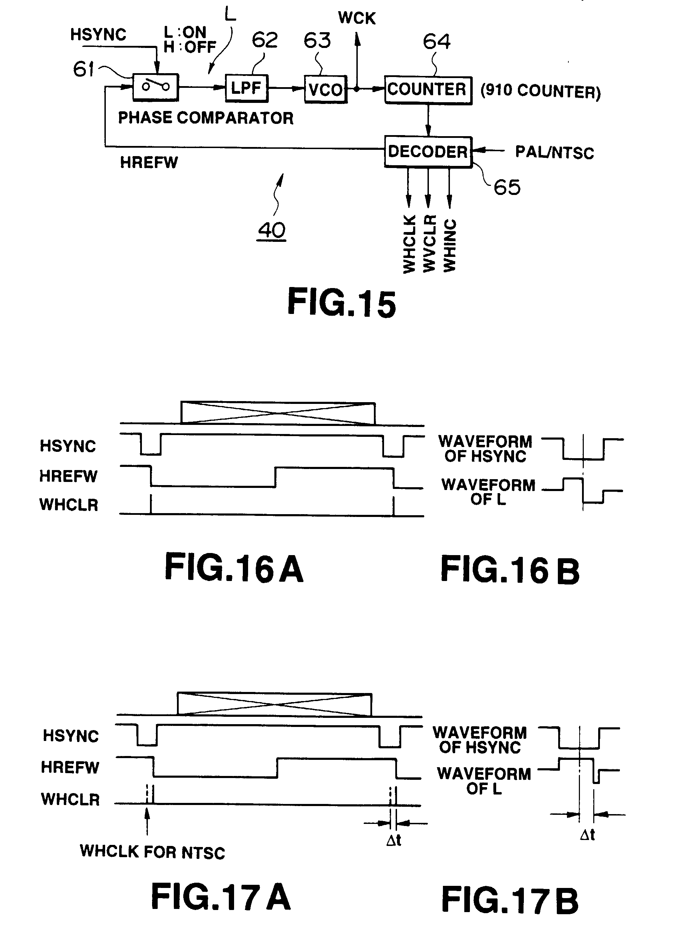

The field double-speed aspect conversion circuit 3 includes a line lock PLL circuit 40. The line lock PLL circuit 40 includes a phase comparator 61 fed with the horizontal synchronization signals HSYNC, as shown in Fig.15. The phase comparator 61 slices an HREFW pulse during the interval of the horizontal synchronization signal HSYNC, as shown at (a) in Fig.16. The HREFW pulse is fed via a low-pass filter (LPF) 62 to a voltage controlled oscillator (VCO) 63. The voltage controlled oscillator (VCO) 63 is driven by a mean error voltage of the HRFEW pulse for generating the write side system clock WCK. The write side system clock WCK is provided to each of the field memories 12, 22, 32, while being divided in frequency by 910 by a counter 64 and a decoder 65 to form the HREFW pulse which is fed back to the phase comparator 61.

If the frequency of the horizontal synchronization signals HSYNC is increased in the line lock PLL circuit 40, the ratio of "highs" (H) in the output of the phase comparator 61 is increased to elevate the driving voltage of the voltage controlled oscillator 63. The frequency of the write side system clocks WCK is then increased, with the period of the HREFW pulse becoming shorter such that the feedback occurs in such a manner that changes in the frequency of the input horizontal synchronization signals HSYNC may be followed appropriately. If the frequency of the horizontal synchronization signals HSYNC is decreased, the ratio of "lows" (L) in the output of the phase comparator 61 is increased, such that the driving voltage of the voltage controlled oscillator (VCO) 63 is lowered. The frequency of the write side system clock WCK is decreased and the period of the HREFW pulse is increased, such that the feedback occurs in such a manner that changes in the frequency of the input horizontal synchronization signals HSYNC may be followed appropriately.

If the center frequency f0 of the line lock PLL circuit 40 coincides with the period of the horizontal synchronization signals HSYNC, the decay of the HREFW pulse is synchronized with the center of the pulse of the horizontal synchronization signals HSYNC, as shown at (b) in Fig.16. The center frequency f0 of the line lock PLL circuit 40 is coincident with the period of the horizontal synchronization signals HSYNC of the PAL signals. If the horizontal synchronization signals HSYNC is derived from the PAL signals, the decay of the HREFW pulse is synchronized with the center of the pulse of the horizontal synchronization signals HSYNC, as shown in Fig.16.

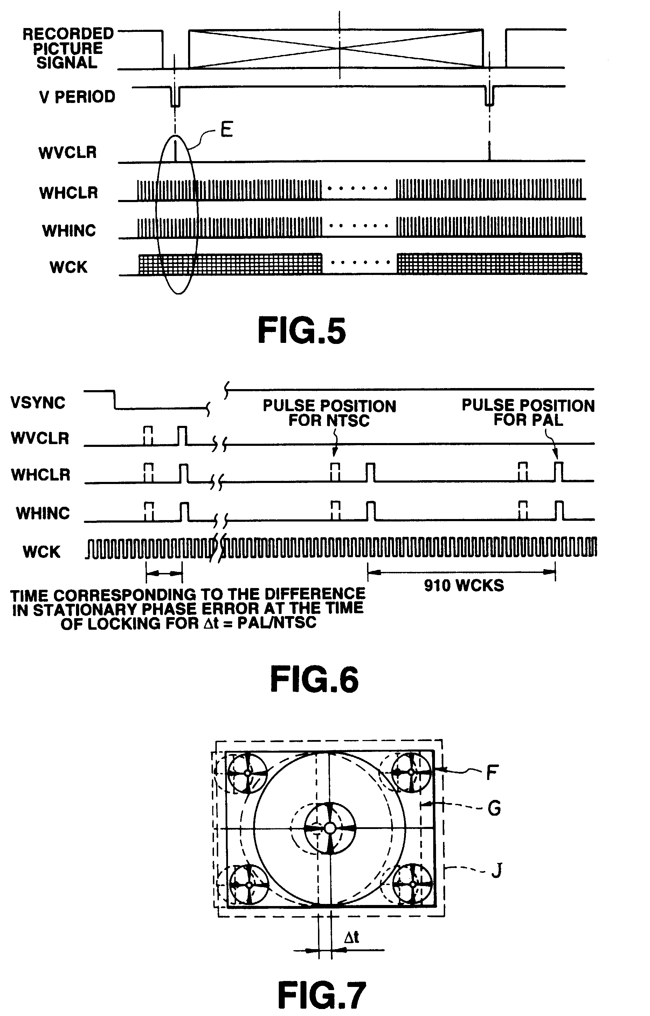

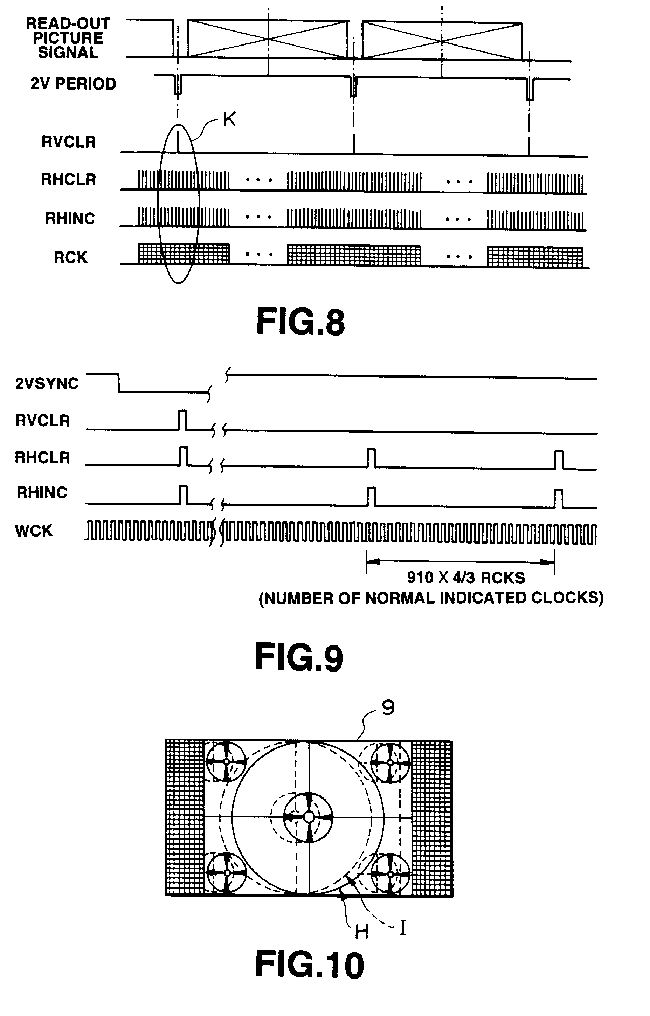

The line lock PLL circuit 40 constitutes a field doubler (double-rate or double-speed) timing controller 41, part of which serves as a control circuit. The field doubler timing controller 41 generates the write address clear pulse WVCLR, the write pixel address clear pulse WHCLR, the readout side system clock RCK, the readout address clear pulse, and the readout pixel address clear pulse RHCLR to route the pulses to each of the field memories 12, 22 and 32. The write address clear pulse WVCLR, the write pixel address clear pulse WHCLR, the readout side system clock RCK, the readout address clear pulse, and the readout pixel address clear pulse RHCLR are generated in synchronism with the period of the vertical synchronization pulses (V-period) or with the period of the double-rate vertical synchronization pulses (2V period) as shown in Figs. 5 and 8.

The field doubler aspect converting circuit 3 has a count controller (countdown and scroll control) 43. The count controller is fed with the write address clear pulse WVCLR, the readout address clear pulse RVCLR and the double-rate synchronization signal 2HSYNC of the horizontal synchronization signal HSYNC to generate the write line address increment pulse WHINC and the readout line address increment pulse RHINC. These pulses are fed to each of the field memories 12, 22 and 32. The double-rate synchronization signal 2HSYNC is fed to the fourth changeover switch 76.

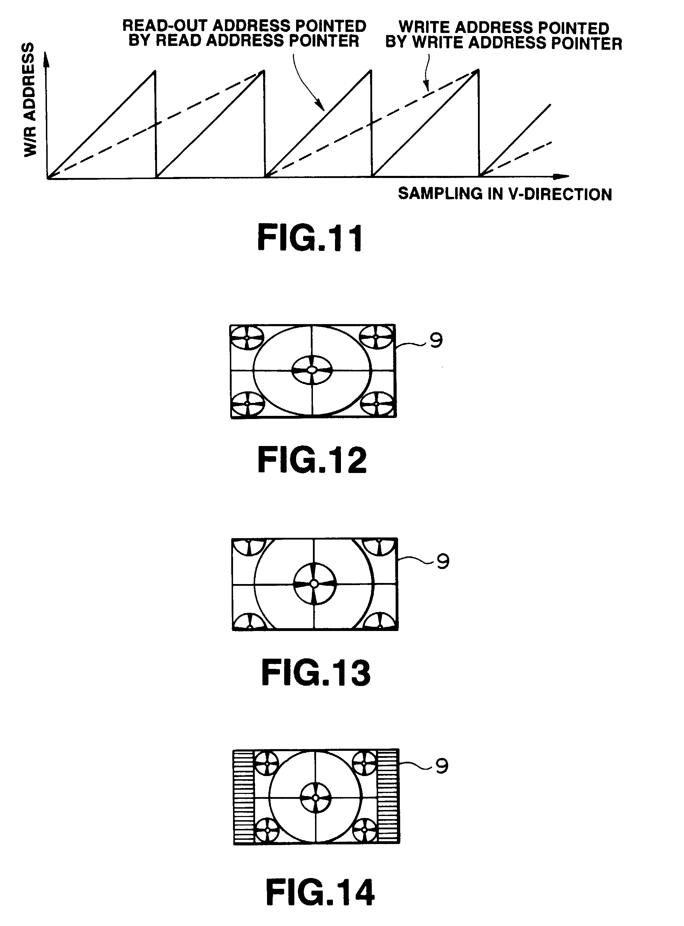

The field doubler aspect converting circuit 41 has an aspect converter 42 (horizontal compression). The aspect converter 42 is fed with signals read out from each of the field memories 12, 22 and 32 to perform aspect conversion, The aspect conversion is a processing operation of compressing the horizontal direction of a picture by 3/4 and adding a frame to each of the left and right sides of the picture to provide a normal display mode as shown in Fig.14. In the absence of the aspect conversion, the entire picture is displayed on the entire surface of the display screen of the CRT 9, by way of a full display mode, as shown in Fig.12. If the vertical direction of the picture is extended by 4/3, the center portion of the picture is displayed on the entire surface of the display screen of the CRT 9, by way of a zoom display mode, as shown in Fig.13.

In the field doubler aspect converting 3, the signals Y, R - Y and B - Y passed through the field doubler aspect converter 42 are converted by first D/A converters 13, 23, 33 into analog signals which are outputted (2Yout, 2R - Yout and 2B - Yout) via first to third low-pass filters 14, 24, 34 and thence transmitted to the fourth changeover switch 76.

In the above-described television apparatus, if the PAL signals or the NTSC signals are provided to the field doubler aspect converting circuit 3, and the normal display mode is selected, the addresses with which the signals are written in the field memories 12, 22 and 32 and the addresses with which the signals are read from the field memories are related with each other by the fact that the rate of changes in the addresses pointed by the read address pointer 52, as indicated by a solid line in Fig.11, is twice that in the addresses pointed by the write address pointer 51, as indicated by a broken line in Fig.11. That is to say, each field is read twice when the picture signals written in thee field memories 12, 22 and 32 are read and outputted.

If the PAL signals are provided to the field doubler aspect converting circuit 3, and the normal display mode is selected, the line lock PLL circuit 40 causes the decay of the HREFW pulse to be synchronized with the center of the pulse of the horizontal synchronization signals HSYNC, as shown in Fig.16. Thus the write address clear pulse WVCLR, the write pixel address clear pulse WHCLR and the write line address increment pulse WHINC are synchronized with the center of the pulse of the vertical synchronization signals VSYNC, as shown in Figs.5 and 6. In this case, each field of the PAL signals is written from the signal start point as from the start address in each of the field memories 12, 22 and 32.

The PAL signals thus written in the field memories 12, 22 and 32 are read as from the start addresses in each of the field memories 12, 22 and 32, based upon the write address clear pulse WVCLR, the write pixel address clear pulse WHCLR and the write line address increment pulse WHINC, generated in synchronism with the centers of the pulses of the double frequency vertical synchronization signals 2VSYNC, as shown in Figs.8 and 9. The PAL signals thus read are displayed on the CRT 9 as a picture free of horizontal deviation with respect to the above-mentioned left and right frames.

If the NTSC signals are provided to the field doubler aspect converting circuit 3, and the normal display mode is selected, the line lock PLL circuit 40 causes the decay of the HREFW pulse to be synchronized with the horizontal synchronization signals HSYNC with a deviation equal to a stationary phase error Δt relative to the pulse center of the horizontal synchronization signals HSYNC, as shown in Fig.17. That is to say, the line lock PLL circuit 40 is adjusted so that its center frequency f0 is matched to the horizontal synchronization signals HSYNC of the PAL signals. If the horizontal synchronization signals HSYNC of the NTSC signals is provided to the line lock PLL circuit 40, the circuit is locked to a frequency higher 109 Hz than the center frequency f0, because the frequency of the horizontal synchronization signals HSYNC of the NTSC signals is higher by 109 Hz than that of the horizontal synchronization signals HSYNC of the PAL signals. Thus the stationary phase error Δt is increased in the direction of increasing the oscillation frequency of the voltage controlled oscillator (VCO) 63 and stabilized for delaying the decay of the HREFW pulse with respect to the pulse center of the horizontal synchronization signals HSYNC.

It is noted that the stationary phase error in the line lock PLL circuit 40 does not become accurately equal to zero even when PLL signals are provided to the field doubler aspect converting circuit 3. Consequently, the stationary phase error Δt during reception of the NTSC signals is in effect the difference between the stationary phase error during reception of the PAL signals and the stationary phase error during reception of the NTSC signals. In the following explanation, the stationary phase error during reception of the PAL signals is assumed to be equal to zero.

If the decay of the HREFW pulse is delayed relative to the pulse center of the horizontal synchronization signals HSYNC, the write address clear pulse WVCLR, the write pixel address clear pulse WHCLR and the write line address increment pulse WHINC, if generated with the decay of the HREFW pulse as the reference, cannot be synchronized with the pulse center of the vertical synchronization signal VSYNC. If the pulses WVCLR, WHCLR and WHINC are not synchronized with the pulse center of the vertical synchronization signal VSYNC, it is not the field start point in the NTSC signals that is written at the start address in each of the field memories 12, 22 and 32. That is to say, the NTSC signals of a picture G offset a distance equal to the stationary phase difference ΔT in the horizontal direction from a picture signal region J written in the field memories 12, 22 and 32 are written in these field memories 12, 22 and 32, as shown in Fig.7. If, when the NTSC signals of the picture G have been written in this manner in each of the field memories 12, 22, 32, these NTSC signals are read as from the start addresses in the field memories 12, 22 and 32 based upon the read address clear pulse RVCLR, the read pixel address clear pulse RHCLR and the read line address increment pulse RHINC, a picture is displayed on the CRT9 as a picture I offset relative to the left and right frames in the horizontal direction, as shown in Fig.10.

In the field doubler aspect converting circuit 3, if the NTSC signals are received, and the decay of the HREFW pulse is delayed with respect to the pulse center of the horizontal synchronization signals HSYNC, the write address clear pulse WVCLR, the write pixel address clear pulse WHCLR and the write line address increment pulse WHINC are generated at a timing preceding the decay of the HREFW pulse. That is to say, the write address clear pulse WVCLR, the write pixel address clear pulse WHCLR and the write line address increment pulse WHINC are generated in synchronism with the pulse center of the vertical synchronization signal VSYNC and at a timing earlier by the time corresponding to the stationary phase error Δt than the decay of the HREFW pulse, as shown by broken lines in Figs.6 and 17. The time corresponding to the stationary phase error ΔT is measured by counting a pre-set number of pulses, using the write side system clocks WCK as references. The counting of the number of pulses may be achieved by modifying the decode values at a decoder 65 of the line lock PLL circuit 40.

Consequently, with the field doubler aspect converting circuit 3, the write address clear pulse WVCLR, the write pixel address clear pulse WHCLR and the write line address increment pulse WHINC are synchronized with the pulse center of the vertical synchronization signal VSYNC, even although the decay of the HREFW pulse is delayed with respect to the center of the horizontal synchronization signals HSYNC, so that the NTSC signals written in the start addresses in the field memories 12,22, 32 are those of the field start points. In other words, the NTSC signals of a picture F free of horizontal deviation are written in the region J of the picture signals written in the field memories 12, 22, 32, as shown in Fig.7.

If, when the NTSC signals of the picture F have been written in this manner in each of the field memories 12, 22, 32, these NTSC signals are read as from the start addresses in the field memories 12, 22 and 32 based upon the read address clear pulse RVCLR, the read pixel address clear pulse RHCLR and the read line address increment pulse RHINC, generated in synchronism with the pulse center of the double-frequency vertical synchronization signal 2VSYNC, a picture is displayed on the CRT 9 as a picture I free of horizontal deviations relative to the left and right frames, as shown in Fig.10.

The television apparatus according to the present invention is not limited to an arrangement in which the center frequency fO of the line local PLL circuit 40 is coincided with the frequency of the horizontal synchronization signals HSYNC of the PAL signals. Thus the frequency f0 may be coincided with the frequency of the horizontal synchronization signals HSYNC of the PAL signals or may be adapted to the frequency employed in any other television systems.

In the television system of the present invention, the CRT is not limited to that having the aspect ratio of the display screen equal to 16 : 9. For example, the aspect ratio may be 4: 3. In this case, the television apparatus may be arranged without a structure for handling the HDTV signals.

## Claims

1. A video signal processing method comprising the steps of:
a first step for selecting one analog video signal from a plurality of kinds of analog video signal;
a second step for converting said selected video signal into a digital video signal;
a third step for storing said digital video signal in a memory;
a fourth step for synchronizing a line lock PLL circuit with the horizontal synchronizing signals of said analog video signal; and
a fifth step for supplying a write address initializing pulse to said field memory, characterised by:
a sixth step of detecting the type of said selected video signal; and in that
in said fifth step the timing of said write address initializing pulse is changed in accordance with the detected type of said selected video signal and the television set to which said line lock PLL circuit is adapted so as to compensate for a difference in the stationary phase error of said analog video signal in the line lock PLL circuit; and in that said memory is a field memory.

2. A video signal processing method according to claim 1, wherein said video signal has a predetermined aspect ratio, said fifth step controls a centre of said video signal in the horizontal line in a display.

3. A video signal processing method according to claim 1 or 2, wherein said video signal has said predetermined aspect ratio, said fifth step controls a centre of said video signal in the vertical line in the display corresponding to the said predetermined aspect ratio.

4. A video signal processing circuit comprising:
an input means (1) for supplying a plurality of kinds of analog video signals;
a switch means (73) for selecting one analog video signal from said plurality of kinds of analog video signals;
said an A/D converter (11, 21, 31) for converting said video signal into digital video signal;
a memory (12, 22, 32) for storing said digital video signal;
a line lock PLL circuit (40) to be synchronized with the horizontal synchronizing signals of said analog video signal; and
a control circuit (43, 65) for supplying a write address initializing pulse (WVCLR) to said memory; characterised by:
a picture signal processing circuit (2) detecting a type of said input video signal, and wherein said control circuit is adapted to change the timing of said write address initializing pulse in accordance with the detected type of said selected video signal and the television system to which said line lock PLL circuit is adapted to compensate for a difference in the stationary phase error of said analog video signal in the line lock PLL circuit; and in that said memory is a field memory.

5. A video signal processing circuit according to claim 4, wherein said video signal has a predetermined aspect ratio, said control means (43, 65) is adapted to control a centre of aid video signal in the horizontal line in a display (9).

6. A video signal processing circuit according to claim 4 or 5, wherein said video signal has said predetermined aspect ratio, said control means (43, 65) is adapted to control a centre of said video signal in the vertical line in a display (9) corresponding to the said predetermined aspect ratio.

7. A video signal processing method according to claim 1, 2 or 3 or a video signal processing circuit according to claim 4, 5 or 6, wherein said aspect ratio is 16 : 9 and said control means (47, 65) is adapted to control said centre of said video signal in the display to said aspect ratio of 16 : 9.

8. A video signal processing method according to claim 1, 2, 3 or 7 or a video signal processing circuit according to any one of claims 4 to 7, wherein said display (9) is a high definition TV and said video signal is normal TV signal.

9. A video signal process method according to claim 1, 2, 3, 7 or 8 or a video signal processing circuit according to any one of claims 4 to 8, wherein said video signal is the NTSC system, PAL system or the SECAM system.

10. A video signal processing method according to claim 1, 2, 3, 7, 8 or 9 or a video signal processing circuit according to any one of claims 4 to 9, wherein said video signal is read from said field memory (13, 22, 33) at a rate equal to twice the write rate of the digital picture signals.

11. A video display apparatus comprising a video signal processing circuit according to any one of claims 4 to 10 and further comprising a display means (9) for displaying said video signal being supplied from said field memory (12, 22, 32).

## Patentansprüche

1. Videosignalbearbeitungsverfahren beinhaltend folgende Schritte:
einen ersten Schritt zur Auswahl eines analogen Videosignales von mehreren Arten von analogen Videosignalen;
einen zweiten Schritt zur Umwandlung des ausgewählten Videosignales in ein digitales Videosignal;
einen dritten Schritt zur Speicherung des digitalen Videosignales in einen Speicher;
einen vierten Schritt zur Synchronisierung eines Zeilenregel-PLL-Kreises mit dem horizontalen Synchronisierungssignal des analogen Videosignales; und
einen fünften Schritt zur Lieferung eines Schreibadressen-Initialisierungssimpulses an den Teilbildspeicher, gekennzeichnet durch:
einen sechsten Schritt zur Detektion des Types des ausgewählten Videosignales; und dadurch, daß
in dem fünften Schritt die Zeitregelung des Schreibadressen-Initialisierungsimpulses verändert wird nach Maßgabe des detektierten Types des ausgewählten Videosignales und des Fernsehapparates, an den der Zeitregel-PLL-Kreis angepaßt ist, um eine Differenz in dem stationären Phasenfehler des analogen Videosignales in dem Zeilenregel-PLL-Kreis zu kompensieren; und dadurch, daß der Speicher ein Teilbildspeicher ist.

2. Videosignalbearbeitungsverfahren nach Anspruch 1, worin das Videosignal ein vorbestimmtes Aspektverhältnis aufweist, wobei der fünfte Schritt ein Zentrum des Videosignales in der horizontalen Zeile in einer Anzeige regelt.

3. Videosignalbearbeitungsverfahren nach Anspruch 1 oder 2, worin das Videosignal das vorbestimmte Aspektverhältnis aufweist, wobei der fünfte Schritt ein Zentrum des Videosignales in der vertikalen Zeile in der Anzeige regelt, korrespondierend mit dem vorbestimmten Aspektverhältnis.

4. Videosignalbearbeitungsschaltung, die folgendes aufweist:
ein Eingabemittel (1) zur Lieferung mehrer Arten von analogen Videosignalen;
ein Schaltmittel (73) zur Auswahl eines analogen Videosignales unter mehreren Arten von analogen Videosignalen;
einen A/D Wandler (11, 21, 31) zur Umwandlung des Videosignales in ein digitales Videosignal;
einen Speicher (12, 22, 32) zum Speichern des digitalen Videosignales;
einen Zeilenregel-PLL-Kreis (40), der mit den horizontalen Synchronisierungssignalen des analogen Videosignales zu synchronisieren ist; und
eine Regelschaltung (43, 65) zur Lieferung eines Schreibadressen-Initialisierungsimpulses (WVCLR) an den Speicher;
gekennzeichnet durch:
eine Bildsignalbearbeitungsschaltung (2), die einen Typ des Eingangssignales detektiert und worin die Regelschaltung ausgelegt ist, um die Zeitregelung des Schreibadressen-Initialisierungsimpulses zu verändern nach Maßgabe des detektierten Types des ausgewählten Videosignales und des Fernsehapparates, an den der Zeilenregel-PLL-Kreis angepaßt ist, um eine Differenz in dem stationären Phasenfehler des analogen Videosignales in dem Zeilenregel-PLL-Kreis zu kompensieren; und dadurch, daß der Speicher ein Teilbildspeicher ist.

5. Videosignalbearbeitungsschaltung nach Anspruch 4, worin das Videosignal ein vorbestimmtes Aspektverhältnis aufweist, wobei das Regelmittel (43, 65) ausgelegt ist, um ein Zentrum des Videosignales in der horizontalen Zeile in einer Anzeige (9) zu regeln.

6. Videosignalbearbeitungsschaltung nach Anspruch 4 oder 5, worin das Videosignal das vorbestimmte Aspektverhältnis aufweist, wobei das Regelmittel (43, 65) ausgelegt ist um ein Zentrum des Videosignales in der vertikalen Zeile in einer Anzeige (9) zu regeln, korrespondierend mit dem vorbestimmten Aspektverhältnis.

7. Videosignalbearbeitungsverfahren nach Anspruch 1, 2 oder 3 oder Videosignalbearbeitungsschaltung nach Anspruch 4, 5 oder 6, worin das Aspektverhältnis 16 : 9 beträgt und das Regelmittel (47, 65) ausgelegt ist, um das Zentrum des Videosignales in der Anzeige auf das Aspektverhältnis 16 : 9 zu regeln.

8. Videosignalbearbeitungsverfahren nach Anspruch 1, 2, 3 oder 7 oder Videosignalbearbeitungsschaltung nach einem der Ansprüche 4 bis 7, worin die Anzeige (9) ein hochauflösendes Fernsehgerät und das Videosignal ein normales Fernsehsignal ist.

9. Videosignalbearbeitungsverfahren nach Anspruch 1, 2, 3, 7 oder 8 oder Videosignalbearbeitungsschaltung nach einem der Ansprüche 4 bis 8, worin das Videosignal dem NTSC-System, dem PAL-System oder dem SECAM-System entspricht.

10. Videosignalbearbeitungsverfahren nach Anspruch 1, 2, 3, 7, 8 oder 9 oder Videosignalbearbeitungsschaltung nach einem der Ansprüche 4 bis 9, worin das Videosignal mit einer Geschwindigkeit aus dem Teilbildspeicher (13, 23, 33) ausgelesen wird, die doppelt so groß ist, wie die Einschreibgeschwindigkeit des digitalen Bildsignales.

11. Videoanzeigegerät aufweisend eine Videosignalbearbeitungsschaltung nach einem der Ansprüche 4 bis 10, die weiterhin ein Anzeigemittel (9) zur Anzeige des Videosignales aufweist, das von dem Teilbildspeicher (12, 22, 32) geliefert wird.

## Revendications

1. Procédé de traitement de signal vidéo comprenant les étapes consistant en :
une première étape destinée à sélectionner un signal vidéo analogique à partir d'une pluralité de types de signaux vidéo analogiques,
une seconde étape destinée à convertir ledit signal vidéo sélectionné en un signal vidéo numérique,
une troisième étape destinée à mémoriser ledit signal vidéo numérique dans une mémoire,
une quatrième étape destinée à synchroniser un circuit à boucle à verrouillage de phase de verrouillage de ligne avec les signaux de synchronisation horizontale dudit signal vidéo analogique, et
une cinquième étape destinée à appliquer une impulsion d'initialisation d'adresse d'écriture dans ladite mémoire de balayage de trame, caractérisé par :
une sixième étape consistant à détecter le type dudit signal vidéo sélectionné, et en ce que
dans ladite cinquième étape, le cadencement de ladite impulsion d'initialisation d'adresse d'écriture est modifié conformément au type détecté dudit signal vidéo sélectionné et au poste de télévision auquel ledit circuit à boucle à verrouillage de phase de verrouillage de ligne est adapté de façon à compenser une différence de l'erreur de phase stationnaire dudit signal vidéo analogique dans le circuit à boucle à verrouillage de phase de verrouillage de ligne, et en ce que ladite mémoire est une mémoire de balayage de trame.

2. Procédé de traitement de signal vidéo selon la revendication 1, dans lequel ledit signal vidéo présente un rapport de forme prédéterminé, ladite cinquième étape commande le centre dudit signal vidéo dans la ligne honzontale d'un dispositif d'affichage.

3. Procédé de traitement de signal vidéo selon la revendication 1 ou 2, dans lequel ledit signal vidéo présente ledit rapport de forme prédéterminé, ladite cinquième étape commande le centre dudit signal vidéo dans la ligne verticale dans le dispositif d'affichage correspondant audit rapport de forme prédéterminé.

4. Circuit de traitement de signal vidéo comprenant :
un moyen d'entrée (1) destiné à appliquer une pluralité de types de signaux vidéo analogiques,
un moyen de commutateur (73) destiné à sélectionner un signal vidéo analogique à partir de ladite pluralité de types de signaux vidéo analogiques,
un convertisseur analogique-numérique (11, 21, 31) destiné à convertir ledit signal vidéo en un signal vidéo numérique,
une mémoire (12, 22, 32) destinée à mémoriser ledit signal vidéo numérique,
un circuit à boucle à verrouillage de phase de verrouillage de ligne (40) devant être synchronisé avec les signaux de synchronisation horizontale dudit signal vidéo analogique, et
un circuit de commande (43, 65) destiné à appliquer une impulsion d'initialisation d'adresse d'écriture (WVCLR) à ladite mémoire, caractérisé par :
un circuit de traitement de signal d'image (2) détectant un type dudit signal vidéo en entrée, et dans lequel ledit circuit de commande est conçu pour modifier le cadencement de ladite impulsion d'initialisation d'adresse d'écriture conformément au type détecté dudit signal vidéo sélectionné et au système de télévision auquel ledit circuit à boucle à verrouillage de phase de verrouillage de ligne est adapté afin de compenser une différence de l'erreur de phase stationnaire dudit signal vidéo analogique dans le circuit à boucle à verrouillage de phase de verrouillage de ligne, et en ce que ladite mémoire est une mémoire de balayage de trame.

5. Circuit de traitement de signal vidéo selon la revendication 4, dans lequel ledit signal vidéo présente un rapport de forme prédéterminé, ledit moyen de commande (43, 65) est conçu pour commander le centre dudit signal vidéo dans la ligne horizontale d'un dispositif d'affichage (9).

6. Circuit de traitement de signal vidéo selon la revendication 4 ou 5, dans lequel ledit signal vidéo présente ledit rapport de forme prédéterminé, ledit moyen de commande (43, 65) est conçu pour commander le centre dudit signal vidéo dans la ligne verticale d'un dispositif d'affichage (9) correspondant audit rapport de forme prédéterminé.

7. Procédé de traitement de signal vidéo selon la revendication 1, 2 ou 3, ou circuit de traitement de signal vidéo selon la revendication 4, 5 ou 6, dans lequel ledit rapport de forme est de 16 : 9 et ledit moyen de commande (47, 65) est conçu pour commander ledit centre dudit signal vidéo dans le dispositif d'affichage avec ledit rapport de forme de 16 : 9.

8. Procédé de traitement de signal vidéo selon la revendication 1, 2, 3 ou 7 ou circuit de traitement de signal vidéo selon l'une quelconque des revendications 4 à 7, dans lequel ledit dispositif d'affichage (9) est un poste de télévision à haute définition et ledit signal vidéo est un signal de télévision normal.

9. Procédé de traitement de signal vidéo selon la revendication 1, 2, 3, 7 ou 8 ou circuit de traitement de signal vidéo selon l'une quelconque des revendications 4 à 8, dans lequel ledit signal vidéo est le système NTSC, le système PAL ou le système SECAM.

10. Procédé de traitement de signal vidéo selon la revendication 1, 2, 3, 7, 8 ou 9 ou circuit de traitement de signal vidéo selon l'une quelconque des revendications 4 à 9, dans lequel ledit signal vidéo est lu à partir de ladite mémoire de balayage de trame (13, 22, 33) à une fréquence égale à deux fois la fréquence d'écriture des signaux d'image numériques.

11. Appareil d'affichage vidéo comprenant un circuit de traitement de signal vidéo selon l'une quelconque des revendications 4 à 10 et comprenant en outre un moyen d'affichage (9) destiné à afficher ledit signal vidéo qui est appliqué à partir de ladite mémoire de balayage de trame (12, 22, 32).
